# EUROPÄISCHE PATENTSCHRIFT

(11) **EP 0 803 459 B1**
(45) Veröffentlichungstag und Bekanntmachung des Hinweises auf die Patenterteilung: **28.11.2001**
(21) Anmeldenummer: 97105622.1
(22) Anmeldetag: 04.04.1997
(51) Int. Cl.: B65H 23/192, B65H 23/18, B65H 20/06, B65H 23/188

(54) **Vorrichtung zum Fördern einer Materialbahn, insbesondere einer Wellpappebahn**
Device for conveying a material web, especially a paperboard web
Dispositif pour convoyer une bande de matériel, notamment une bande de carton ondulé

(30) Priorität: 12.04.1996 DE 19614519
(43) Veröffentlichungstag der Anmeldung: 29.10.1997
(73) Patentinhaber: BHS Corrugated Maschinen- und Anlagenbau GmbH, 92729 Weiherhammer (DE)
(72) Erfinder: Hecky, Thomas, 92637 Weiden (DE)
(74) Vertreter: Schieschke, Klaus, Dipl.-Ing.

(56) Entgegenhaltungen:
- WO-A-95/18762
- DE-A- 4 212 847
- US-A- 5 244 518

## Beschreibung

Die Erfindung betrifft eine Vorrichtung zum Fördern einer Materialbahn, insbesondere einer Wellpappebahn, mit den Merkmalen des Oberbegriffs des Patentanspruchs 1.

Bei der Herstellung von Wellpappe werden zwei oder mehrere Papierbahnen, von denen mindestens eine im Verlauf des Herstellungsprozesses gewellt wird, miteinander verklebt. Hierzu müssen die einzelnen zu verarbeitenden Papierbahnen und auch die fertige Wellpappe mit einer vorbestimmten Geschwindigkeit durch bzw. innerhalb der Wellpappenanlage, die aus mehreren nacheinander angeordneten Maschinen oder Bearbeiturgsstationen besteht, transportiert werden.

Für den Transport der Bahnen finden entweder separate Fördervorrichtungen, sog. Abzugsvorrichtungen, Verwendung, die die betreffende Materialbahn durch eine oder mehrere vorgeordnete Bearbeitungsstationen oder Maschinen ziehen, oder in die betreffende einzelne Maschine oder Bearbeitungsstation integrierte Fördervorrichtungen, die die Materialbahn durch die betreffende Maschine oder Bearbeitungsstation und ggf. zusätzlich durch eine oder mehrere vorgeordnete Maschinen oder Bearbeitungsstationen ziehen. Dabei muß ein Schlupf zwischen den antreibenden oder ziehenden Elementen und der Materialbahn möglichst vermieden werden, um eine konstante Fördergeschwindigkeit zu gewährleisten und eine Beeinträchticung der zu fördernden Materialbahn zu vermeiden.

So ist beispielsweise aus der DE-OS 22 01 742 bekannt, die Wellpappebahn mittels einer separaten Fördervorrichtung, welche aus endlosen Ober- und Untergurten besteht, durch eine vorgeordnete Trockenvorrichtung zu ziehen.

Ebenfalls aus der DE-OS 22 01 742 ist eine integrierte Trokken- und Transportvorrichtung bekannt, bei der der Transport der fertig verklebten Wellpappe innerhalb der Trocken- und Transportvorrichtung mittels jeweils einem endlosen Ober- und Untergurt transportiert wird und das Trocknen der Wellpappebahn durch das Saugen eines Luftstroms quer zur Laufrichtung der Wellpappebahn durch das Wellpappeinnere erfolgt. Durch den im Wellpappeinneren entstehenden Unterdruck ergibt sich zusätzlich eine hohe Haftreibung zwischen der zu transportierenden Wellpappe und dem Ober- bzw. Untergurt. Hierdurch wird ein sehr geringer Schlupf zwischen den Gurten und den jeweiligen Oberflächen der Wellpappebahn erreicht.

Dieses Verfahren zur Vermeidung eines unerwünscht hohen Schlupfs zwischen der zu transportierenden Wellpappe ist jedoch auf diese spezielle Trockenvorrichtung beschränkt. Insbesondere läßt sich dieses Verfahren nicht auf eine Transportvorrichtung für eine glatte Papierbahn anwenden.

Des weiteren ist aus der DE 42 12 847 A1 eine Heizvorrichtung für eine Wellpappenanlage mit integrierter Fördervorrichtung bekannt, bei der die Heizvorrichtung aus Heizplatten besteht, über welche die zu trocknende Wellpappenbahn mittels einem darüber geführten Endlosgurt gefördert wird. Über dem unteren, die Wellpappebahn fördernden Trum des Endlosgurts sind eine oder mehrere Andruckvorrichtungen angeordnet, die das untere Trum des Endlosgurts gegen die Oberseite der Wellpappebahn drücken. Diese Andruckvorrichtungen können beispielsweise als heb- und senkbare Andruckwalzen oder Druckhauben ausgebildet sein. Dabei muß der Andruckwert des Endlosgurts für das Andrücken des Trums des Endlosgurts an die Oberseite der Wellpappenbahn so bemessen sein, daß die Haftreibung des Endlosgurts gegenüber der Wellpappebahn stets größer ist als die Gleitreibung zwischen der Wellpappebahn und der oder den Heizflächen.

Zur Steuerung der auf die Wellpappebahn übertragenen Wärmemenge ist aus der DE 42 12 847 A1 bekannt, die Temperatur bzw. die Feuchtigkeit der zulaufenden Wellpappebahn bzw. der auslaufenden Wellpappebahn zu messen und die Anpreßwerte der Andruckvorrichtung abhängig von den Temperatur- bzw. Feuchtigkeitsmeßwerten zu steuern.

Nachteilig bei all diesen bekannten Vorrichtungen ist jedoch, daß ein Schlupf zwischen der zu fördernden Materialbahn und den die Materialbahn fördernden Elementen nicht in jeder Situation vermieden werden kann. Insbesondere bei Veränderungen von Prozeßparametern (z.B. Temperatur, Laufgeschwindigkeit der Materialbahn etc.), bei Veränderungen von Parametern der Materialbahn (z.B. Breite, Dicke, Oberflächenbeschaffenheit etc) oder während der Anfahr- und Stillsetzphase der Maschine, d.h. bei positiven oder negativen Beschleunigungen, kann bei bekannten Fördervorrichtungen ein Schlupf nicht mit ausreichender Sicherheit vermieden werden. Insbesondere bei Umstellungen der Wellpappenanlage zur Herstellung anderer Bahnbreiten, anderer Wellpappearten oder zur Verarbeitung anderer Qualitäten der Ausgangsmaterialen wird derzeit keine erneute Einstellung der Transportvorrichtungen vorgenommen.

Der vorliegenden Erfindung liegt daher die Aufgabe zugrunde, eine Vorrichtung zum Fördern einer Materialbahn, insbesondere einer Wellpappebahn, zu schaffen, bei welcher ein Schlupf zwischen dem oder den antreibenden Elementen und der Materialbahn auch dann sicher vermieden wird, wenn sich Prozeßparameter und/oder Parameter der zu fördernden Materialbahn ändern.

Die Erfindung löst diese Aufgabe mit den Merkmalen des kennzeichnenden Teils des Patentanspruchs 1.

Durch die Erfassung der Geschwindigkeit der Materialbahn ist es der Steuereinheit der erfindungsgemäßen Fördervorrichtung möglich, die Andruckeinrichtung hinsichtlich der ausgeübten Anpreßkraft so anzusteuern, daß kein Schlupf zwischen der Materialbahn und dem zumindest einen angetriebenen Element auftritt. Hierzu wird die Differenz zwischen dem der Steuereinheit bekannten Sollwert der Bahngeschwindigkeit, welche dem Sollwert der Antriebsgeschwindigkeit des zumindest einen angetriebenen Elements entspricht, und dem erfaßten Istwert der Bahngeschwindigkeit gebildet und die Druckkraft zumindest so weit erhöht, daß die Differenz gleich Null ist oder kleiner ist als ein vorgegebener geringer zulässiger Wert.

In der bevorzugten Ausführungsform der Erfindung steuert die Steuereinheit die Andruckeinrichtung so an, daß die Andruckkraft gleich der minimal möglichen Andruckkraft ist, bei der sich ein Schlupf gleich Null bzw. ein zulässiger Schlupf ergibt.

Hierdurch ergibt sich insbesondere bei der Verwendung von Andruckelementen mit Druckschuhen oder anderen Elementen innerhalb der Fördervorrichtung, bei denen eine Gleitreibung auftritt, der Vorteil einer minimal erforderlichen Antriebsleistung.

In einer bevorzugten Ausführungsform der Erfindung ist ein weiterer Sensor zur Erfassung der Ist-Geschwindigkeit des zumindest einen angetriebenen Elements vorgesehen. Hierdurch ergibt sich der Vorteil, daß die Ist-Geschwindigkeit des zumindest einen angetriebenen Elements tatsächlich erfaßbar ist und nicht von einer vorgegebenen Soll-Geschwindigkeit für den Antrieb abweichen kann. Auf diese Weise ergibt sich der Vorteil, daß als Antriebe einfacher aufgebaute Antriebe, beispielsweise solche mit Asynchron-Elektromotoren verwendbar sind, da das Sensorsignal gleichzeitig als Regelparameter für das Konstanthalten der Antriebsgeschwindigkeit verwendbar ist.

Diese Regelung kann selbstverständlich ebenfalls von der Steuereinheit mit übernommen werden.

Bei der bevorzugten Ausführungsform der Erfindung umfaßt das zumindest eine Anlageelement ebenfalls ein angetriebenes Element. Hierdurch ergibt sich der Vorteil, daß die zu transportierende Materialbahn an beiden Oberflächen angetrieben wird. Dabei wird insbesondere beim Transport einer frisch verklebten Wellpappebahn verhindert, daß die einzelnen Teilbahnen gegeneinander verschoben werden. Eine Beeinträchtigung der zu transportierenden Materialbahn wird daher sicher vermieden.

Bei der bevorzugten Ausführungsform der Erfindung ist das zumindest eine Anlageelement als Endlosgurt, insbesondere als Untergurt, ausgebildet.

Die Ist-Geschwindigkeit des angetriebenen Elements des Anlageelements kann mittels eines weiteren Sensors erfaßt werden, wobei das Sensorsignal wiederum zur Regelung der Antriebsgeschwindigkeit dieses Elements verwendet werden kann.

Bei der bevorzugten Ausführungsform der Erfindung regelt die Steuereinheit die Antriebsgeschwindigkeit des zumindest einen angetriebenen Elements und die Antriebsgeschwindigkeit des angetriebenen Elements des zumindest einen Anlageelements so, daß diese die jeweilige Oberfläche der Materialbahn mit derselben Geschwindigkeit antreiben.

Zusammen mit der Steuerung der von dem Andruckelement erzeugten Anpreßkraft wird daher zum einen vermieden, daß die Bahngeschwindigkeit geringer ist als die geringere der beiden Antriebsgeschwindigkeiten der angetriebenen Elemente und zum anderen, daß die beiden Antriebsgeschwindigkeiten der angetriebenen Elemente an der Ober- und Unterseite der zu fördernden Materialbahn im wesentlichen gleich sind, d.h die Differenz der beiden Geschwindigkeiten gleich Null oder geringer als ein zulässiger Schwellwert ist.

Weitere Ausgestaltungen der Erfindung ergeben sich aus den Unteransprüchen.

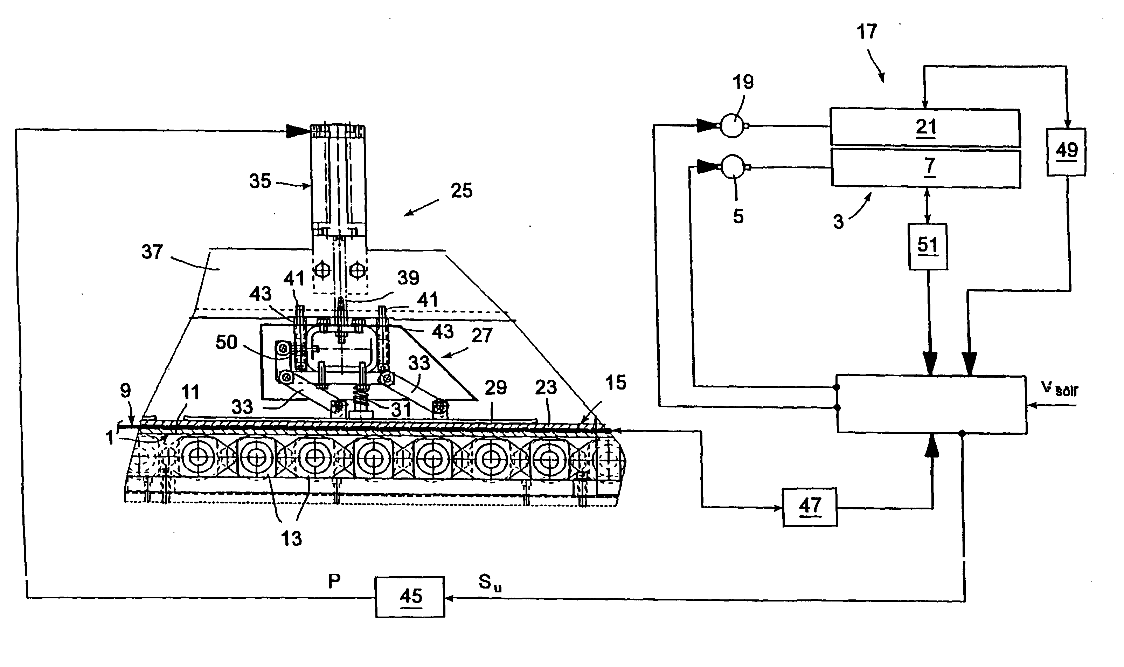

Die Erfindung wird nachstehend anhand eines in der Zeichnung dargestellten Ausführungsbeispiels näher erläutert. Die einzige Figur zeigt eine schematische Darstellung eines Ausschnitts aus einer Fördervorrichtung nach der Erfindung sowie schematisch die zugehörige Steuerung der Vorrichtung.

Der in der Zeichnung dargestellte Ausschnitt einer Transportvorrichtung umfaßt einen Untergurt 1, der in üblicher Weise als Endlosgurt ausgebildet ist und um wenigstens zwei nicht dargestellte Umlenkrollen geführt ist, von denen zumindest eine mittels eines elektromotorischen Antriebs 3 angetrieben ist. Der in der Zeichnung nur schematisch dargestellte elektromotorische Antrieb 3 umfaßt einen Elektromotor 5, welcher über ein zwischengeschaltetes Getriebe 7 mit zumindest einer der Umlenkrollen wirkungsmäßig verbunden ist. Das für den Transport einer zu fördernden Materialbahn 9 maßgebende Trum 11 des Untergurts 1 ist über eine Kette von Rollen 13 geführt, die zur Unterstützung des Trums 11 und zur Vermeidung eines Durchhangs des Trums 11 bzw. einer der Andruckkraft entgegenwirkenden Kraft dienen. Die Oberseite des Trums 11 des Untergurts 1 greift an der Unterseite der Materialbahn 9 an und bewirkt zusammen mit dem ebenfalls in gleicher Weise angetriebenen Obergurt 15 den Transport der Materialbahn 9 in der angegebenen Pfeilrichtung.

Der Obergurt 15 ist wiederum in an sich bekannter Weise als Endlosgurt ausgebildet, welcher über zumindest zwei nicht dargestellte Umlenkrollen geführt ist. Zumindest eine der Umlenkrollen ist wiederum mittels eines elektromotorischen Antriebs 17 angetrieben. Der elektromotorische Antrieb 17 besteht aus einem Elektromotor 19 sowie aus einem Getriebe 21.

Ein Trum 23 des Obergurts 15 beaufschlagt die Oberseite der zu fördernden Materialbahn 9. Zur Vermeidung eines Schlupfs zwischen der Materialbahn 9 und den Trumen 11 bzw. 23 des Untergurts 1 bzw. des Obergurts 15 ist eine Andruckeinrichtung 25 vorgesehen, welche einen quer zur Förderrichtung der Materialbahn 9 verschiebbaren bzw. mit einer Druckkraft beaufschlagbaren Druckschuh 27 umfaßt.

Der Druckschuh 27 beaufschlagt mit seiner Druckplatte 29 die Oberseite des Trums 23 des Obergurts 15. Die Druckplatte 29 ist gegen die Kraft einer Feder 31 verschwenkbar am Druckschuh angeordnet, so daß bei einer Verschiebung des Druckschuhs 27 ein Auslenken der verschwenkbaren Hebel 33 und damit eine Änderung der von der Druckplatte 29 auf das Trum 23 ausgeübten Druckkraft bewirkt wird.

Der Verschiebeantrieb für den Druckschuh 27 wird mittels einer Kolben/Zylindereinheit 35 ermöglicht, welche an einem ortsfesten Rahmenteil 37 der Transportvorrichtung befestigt ist. Der Kolben 39 der Kolben/Zylindereinheit 35 ist mit dem Druckschuh 27 gekoppelt, welcher zusätzlich in Richtung der Verschiebebewegung mittels im Rahmenteil 37 vorgesehener Bolzer 41 geführt ist, welche in Buchsen 43 im Druckschuh 27 eingreifen.

Der Verschiebeweg der Kolben/Zylindereinheit 35 ist so bemessen, daß die Druckplatte 29 des Druckschuhs 27 im Extremfall vollkommen von der Oberseite des Trums 23 abgehoben werden kann. Hierzu muß selbstverständlich der Verschwenkweg der Hebel 33 bzw. der Federweg der Feder 31 durch den Anschlag begrenzt werden.

Zur Erzeugung einer vorbestimmten Normalkraft, mit welcher das Trum 23 des Obergurts 15 von der Druckplatte 29 des Druckschuhs 27 beaufschlagt werden soll bzw. zur Erzeugung einer vorbestimmten Flächenpressung ist die Kolben/Zylindereinheit 35 von einer Steuereinheit 43 ansteuerbar ausgebildet. Die Steuereinheit 43 gibt hierzu ein Steuersignal S_{U}, beispielsweise eine Steuerspannung, ab, welches von einer Wandlereinheit 45 in eine physikalische Größe zur Erzeugung eines entsprechenden Verschiebewegs mittels der Kolben/Zylindereinheit 35, beispielsweise einen bestimmten Steuerdruck P, umgesetzt wird. Der Steuerdruck P wird der Kolben/Zylindereinheit 35 in geeigneter Weise zugeführt, um eine Verschiebung des Druckschuhs 27 in der gewünschten Richtung und damit eine Erhöhung bzw. eine Erniedrigung der auf das Trum ausgeübten Normalkraft zu bewirken.

Wie in der einzigen Figur dargestellt, ist ein erster Sensor 47 zur Erfassung der tatsächlichen Fördergeschwindigkeit der Materialbahn 9 vorgesehen, dessen Sensorsignal der Steuereinheit 43 zugeführt ist. Das Sensorsignal des Sensors 47 wird von der Steuereinheit 43 in der Weise ausgewertet, daß dieses mit der Antriebsgeschwindigkeit des Obergurts und/oder des Untergurts 1 verglichen wird. Die ermittelte Differenz kann dann ausgeregelt werden, so daß ein Schlupf zwischen der Materialbahn 9 und dem Trum 23 des Obergurts 15 bzw. dem Trum 11 des Untergurts 1 sicher vermieden wird.

Die Geschwindigkeit des Obergurts 15 bzw. des Untergurts 1 muß hierfür selbstverständlich der Steuereinheit 43 bekannt sein. Dies kann zum einen dadurch erfolgen, daß als Sollwert das von der Steuereinheit 43 an die Elektromotoren 5 bzw. 19 der elektromotorischen Antriebe 3 bzw. 17 ausgegebene Geschwindigkeitssignal verwendet wird. Dies führt jedoch nur dann zu ausreichenden Ergebnissen, wenn die Elektromotoren 5 bzw. 19 so beschaffen sind, daß diese auf das betreffende von der Steuereinheit 43 ausgegebene Signal in jedem Fal. mit einer genau definierten entsprechenden Antriebsgeschwindigkeit reagieren. Selbstverständlich muß auch jedes der Getriebe 7 bzw. 21 einschließlich der Kraftübertragung auf den Untergurt 1 bzw. den Obergurt 15 ohne jeglichen Schlupf sein, so daß die Ansteuerung der Elektromotoren 5 bzw. 19 mittels des von der Steuereinheit 43 ausgegebenen Signals exakt zu dem gewünschten Sollwert der Antriebsgeschwindigkeit der Trume 11 bzw. 23 führt.

Da dies mit einem entsprechenden Aufwand verbunden ist und zudem auf diese Weise nicht in jedem Fall das gewünschte Ergebnis erreichbar ist, umfaßt die erfindungsgemäße Vorrichtung, wie in der einzigen Figur dargestellt, einen zweiten Sensor 49 und einen dritten Sensor 51 zur Erfassung der Antriebsgeschwindigkeiten des Obergurts 15 bzw. des Untergurts 1. Die Sensoren können dabei, wie dargestellt, mit den Getrieben 21 bzw. 7 gekoppelt sein oder aber direkt die Geschwindigkeit des Obergurts bzw. des Untergurts erfassen. Auch eine Kopplung mit den Motoren 19 bzw. 5 ist denkbar.

Die Sensoren 49 bzw. 51 bieten den Vorteil, daß die Steuereinheit 43 durch eine Auswertung jedes der Sensorsignale eine Regelung der Antriebsgeschwindigkeit des Obergurts 15 bzw. des Untergurts 1 in Form einer geschlossenen Regelschleife bewirken kann. Hierdurch kann ein exakter Gleichlauf des Obergurts 15 mit dem Untergurt 1 erreicht werden, so daß eine Beeinträchtigung der zu fördernden Materialbahn 9 infolge unterschiedlicher Antriebsgeschwindigkeiten sicher vermieden werden kann. Zusätzlich kann hierdurch selbstverständlich eine vorgegebene Sollgeschwindigkeit exakt eingehalten werden.

Die Regelung erfolgt dabei vorzugsweise in der Weise, daß der Steuereinheit 43 ein Soll-Geschwindigkeitswert vₛₒₗₗ zugeführt wird oder in der Steuereinheit gespeichert ist, welcher der gewünschten Fördergeschwindigkeit für die Materialbahn entspricht. Die Steuereinheit 43 erzeugt abhängig von den Signalen der Sensoren 49 bzw. 51 solche Stellgrößen für die Elektromotoren 19 bzw. 5, daß die von den Sensoren erfaßte Ist-Geschwindigkeit nicht oder nur um einen zulässigen geringen Betrag vom Sollwert vₛₒₗₗ abweicht.

Des weiteren wertet, wie bereits vorstehend ausgeführt, die Steuereinheit 43 das Signal des Sensors 47 zur Erfassung der Fördergeschwindigkeit der Materialbahn 9 aus und regelt die auf das Trum 23 des Obergurts 15 mittels des Druckschuhs 27 ausgeübte Normalkraft so, daß die Abweichung der erfaßten Ist-Geschwindigkeit der Materialbahn 9 nicht oder nur um einen zulässigen geringen Wert von der Sollgeschwindigkeit vₛₒₗₗ abweicht.

Auf diese Weise ist gewährleistet, daß auch bei einer Änderung von Produktionsparametern, wie die Änderung der Fördergeschwindigkeit, Temperaturänderungen etc. oder bei Änderungen von Parametern der zu fördernden Materialbahn, beispielsweise bei einer Änderung der Dicke der Materialbahn, der Papiereigenschaften, der Breite der Materialbahn etc., in jedem Fall die gewünschte Fördergeschwindigkeit aufrechterhalten wird und keinerlei Beeinträchtigung der geförderten Materialbahn erfolgt.

Im Sinne einer möglichst geringen Antriebsleistung erfolgt die Regelung der Andruckkraft so, daß gerade kein Schlupf auftritt, d.h. nur die minimal nötige Andruckkraft ausgeübt wird und damit die Reibungsverluste minimiert werden.

Selbstverständlich ist das Grundprinzip der vorliegenden Erfindung nicht auf das dargestellte Ausführungsbeispiel beschränkt. Beispielsweise kann anstelle eines Druckschuhs auch eine Druckluft erzeugende Vorrichtung oder eine oder mehrere Andruckrollen verwendet werden. Ebenso kann der Untergurt im einfachsten Fall vollständig entfallen und anstelle dessen eine gleitende Bewegung der Materialbahn 9 entlang einer Anlagefläche erfolgen. Letzteres eignet sich insbesondere für den Fall, daß die erfindungsgemäße Fördervorrichtung in eine Trockeneinrichtung oder Heizeinrichtung integriert werden soll.

Auch kann bei der dargestellten Vorrichtung beispielsweise nur die Antriebsgeschwindigkeit eines der Gurte mittels eines entsprechenden Sensors erfaßt werden, um eine Ausregelung eines möglicherweise entstehenden Schlupfs zwischen der Materialbahn und dem betreffenden Gurt vorzunehmen.

## Patentansprüche

1. Vorrichtung zum Fördern einer Materialbahn (9), insbesondere einer Wellpappebahn,
a) mit zumindest einem angetriebenen Element (15), welches an einer Oberfläche der zu fördernden Materialbahn (9) angreift und welches
b) mit zumindest einem die andere Oberfläche der Materialbahn (9) beaufschlagenden Anlageelement (1) zusammenwirkt, wobei auf die Materialbahn (9) eine zur Erzeugung einer ausreichenden Reibkraft erforderliche Andruckkraft ausgeübt wird,
c) wobei das zumindest eine Anlageelement (1) oder das zumindest eine angetriebene Element (15) mittels einer von einer Steuereinheit (43) ansteuerbaren Andruckeinrichtung (25) beaufschlagbar ist.
**dadurch gekennzeichnet**,
d) daß ein Sensor (47) zur Erfassung der Fördergeschwindigkeit der Materialbahn (9) vorgesehen ist, daß das Sensorsignal der Steuereinheit (43) zugeführt ist und daß die Steuereinheit die Andruckeinrichtung (25) derart ansteuert, daß die Differenz zwischen der erfassten Bahngeschwindigkeit und der der Steuereinheit (43) bekannten Sollgeschwindigkeit (vₛₒₗₗ) im wesentlichen gleich Null ist.

2. Vorrichtung nach Anspruch 1, **dadurch gekennzeichnet, daß** die Steuereinheit (43) die Andruckeinrichtung (25) derart ansteuert, daß die Andruckkraft im wesentlichen der minimal nötige Andruckkraft entspricht.

3. Vorrichtung nach Anspruch 1 oder 2, **dadurch gekennzeichnet, daß** ein zweiter Sensor (49) zur Erfassung der Ist-Geschwindigkeit des zumindest einen angetriebenen Elements (15) vorgesehen ist, dessen Signal der Steuereinheit (43) zugeführt ist.

4. Vorrichtung nach einem der vorhergehenden Ansprüche, **dadurch gekennzeichnet, daß** das zumindest eine angetriebene Element (15) ein angetriebener Endlosgurt ist.

5. Vorrichtung nach einem der vorhergehenden Ansprüche, **dadurch gekennzeichnet, daß** das zumindest eine Anlageelement (1, 13) ein angetriebenes Element (1) umfaßt.

6. Vorrichtung nach einem der vorhergehenden Ansprüche, **dadurch gekennzeichnet, daß** das zumindest eine Anlageelement (1) einen Endlosgurt oder eine oder mehrere Andruckrollen umfaßt.

7. Vorrichtung nach einem der Ansprüche 4 bis 6, **dadurch gekennzeichnet, daß** die Andruckeinrichtung (25) einen Druckschuh (27) umfaßt, der den Endlosgurt (15) beaufschlagt.

8. Vorrichtung nach einem der vorhergehenden Ansprüche, **dadurch gekennzeichnet, daß** die Andruckeinrichtung (25) eine steuerbare pneumatische oder hydraulische Kolben/Zylindereinheit (35) umfaßt.

9. Vorrichtung nach einem der Ansprüche 5 bis 8, **dadurch gekennzeichnet, daß** zumindest ein dritter Sensor (51) zur Erfassung der Ist-Geschwindigkeit des angetriebenen Elements (1) des Anlageelements (1, 13) vorgesehen ist, dessen Signal der Steuereinheit (43) zugeführt ist.

10. Vorrichtung nach Anspruch 9, **dadurch gekennzeichnet, daß** die Steuereinheit (43) die Antriebsgeschwindigkeit des zumindest einen angetriebenen Elements (15) und die Antriebsgeschwindigkeit des angetriebenen Elements (1) des zumindest einen Anlageelements (1, 13) so regelt, daß diese die betreffende Oberfläche der Materialbahn (9) im wesentlichen mit derselben Geschwindigkeit antreiben.

## Claims

1. Apparatus for conveying a material web (9), in particular a corrugated board web,
a) comprising at least one driven element (15), which acts upon a surface of the material web (9) to be conveyed and which
b) cooperates with at least one contact element (1), which acts upon the other surface of the material web (9), wherein a contact pressure force needed to generate an adequate frictional force is exerted upon the material web (9),
c) wherein the at least one contact element (1) or the at least one driven element (15) may be acted upon by means of a contact pressure device (25), which is controllable by a control unit (43),
**characterized in**
d) that a sensor (47) is provided for defecting the conveying speed of the material web (9), that the sensor signal is supplied to the control unit (43) and that the control unit controls the contact pressure device (25) in such a way that the difference between the detected web speed and the setpoint speed (vₛₒₗₗ) known to the control unit (43) is substantially equal to zero.

2. Apparatus according to claim 1, **characterized in that** the control unit (43) controls the contact pressure device (25) in such a way that the contact pressure force substantially corresponds to the minimum required contact pressure force.

3. Apparatus according to claim 1 or 2, **characterized in that** a second sensor (49) for detecting the actual speed of the at least one driven element (15) is provided, the signal of which is supplied to the control unit (43).

4. Apparatus according to one of the preceding claims, **characterized in that** the at least one driven element (15) is a driven continuous belt.

5. Apparatus according to one of the preceding claims, **characterized in that** the at least one contact element (1, 13) comprises a driven element (1).

6. Apparatus according to one of the preceding claims, **characterized in that** the at least one contact element (1) comprises a continuous belt or one or more contact pressure rollers.

7. Apparatus according to one of claims 4 to 6, **characterized in that** the contact pressure device (25) comprises a pressure shoe (27), which acts upon the continuous belt (15).

8. Apparatus according to one of the preceding claims, **characterized in that** the contact pressure device (25) comprises a controllable pneumatic or hydraulic piston/cylinder unit (35).

9. Apparatus according to one of claims 5 to 8, **characterized in that** at least one third sensor (51) for detecting the actual speed of the driven element (1) of the contact element (1, 13) is provided, the signal of which is supplied to the control unit (43).

10. Apparatus according to claim 9, **characterized in that** the control unit (43) regulates the driving speed of the at least one driven element (15) and the driving speed of the driven element (1) of the at least one contact element (1, 13) in such a way that the latter drive the relevant surface of the material web (9) at substantially the same speed.

## Revendications

1. Dispositif pour convoyer une bande de matériau (9), notamment une bande de papier ondulé,
a) comportant au moins un élément entraîné (15), qui s'accroche à une surface de la bande de matériau à convoyer (9), et qui
b) coopère avec au moins un élément d'application (1), qui charge l'autre surface de la bande de matériau (9), une force de serrage nécessaire pour produire une force de frottement suffisante étant appliquée à la bande de matériau (9),
c) dans lequel le au moins un élément d'application (1) ou le au moins un élément entraîné (15) peut être chargé au moyen d'un dispositif de serrage (25) commandable par une unité de commande (43),
**caractérisé**
d) en ce qu'il est prévu un capteur (47) pour détecter la vitesse d'entraînement de la bande de matériau (9), en ce que le signal du capteur est envoyé à une unité de commande (43) et en ce que l'unité de commande commande le dispositif de serrage (25) de telle sorte que la différence entre la vitesse détectée de la bande et la vitesse de consigne (v_{consigne}) connue de l'unité de commande (43), est essentiellement égale à zéro.

2. Dispositif selon la revendication 1, **caractérisé en ce que** l'unité de commande (43) commande le dispositif de serrage (25) de telle sorte que la force de serrage correspond essentiellement à la force de serrage minimale nécessaire.

3. Dispositif selon la revendication 1 ou 2, **caractérisé en ce qu'**il est prévu un second capteur (49) pour détecter la vitesse réelle du au moins un élément entraîné (15), dont le signal est envoyé à l'unité de commande (43).

4. Dispositif selon l'une des revendications précédentes, **caractérisé en ce que** le au moins un élément entraîné (15) est une courroie sans fin entraînée.

5. Dispositif selon l'une des revendications précédentes, **caractérisé en ce que** le au moins un élément d'application (1, 13) comprend un élément entraîné (1).

6. Dispositif selon l'une des revendications précédentes, **caractérisé en ce que** le au moins un élément d'application (1) comprend une courroie sans fin ou un ou plusieurs rouleaux de serrage.

7. Dispositif selon l'une des revendications 4 à 6, **caractérisé en ce que** le dispositif de serrage (25) comprend un sabot de compression (27), qui charge la courroie sans fin (15).

8. Dispositif selon l'une des revendications précédentes, **caractérisé en ce que** le dispositif de serrage (25) comprend une unité à piston/cylindre pneumatique ou hydraulique commandable (35).

9. Dispositif selon l'une des revendications 5 à 8, **caractérisé en ce qu'**au moins un troisième capteur (51) est prévu pour la détection de la vitesse réelle de l'élément entraîné (1) de l'élément d'application (1, 13), dont le signal est envoyé à l'unité de commande (43).

10. Dispositif selon la revendication 9, **caractérisé en ce que** l'unité de commande (43) règle la vitesse d'entraînement du au moins un élément entraîné (15) et la vitesse d'entraînement de l'élément entraîné (1) du au moins un élément d'application (1, 13) de telle sorte que ces éléments entraînent la surface considérée de la bande de matériau (9) essentiellement à la même vitesse.
